# EUROPÄISCHE PATENTSCHRIFT

(11) **EP 0 359 115 B1**
(45) Veröffentlichungstag und Bekanntmachung des Hinweises auf die Patenterteilung: **16.02.1994**
(21) Anmeldenummer: 89116510.2
(22) Anmeldetag: 07.09.1989
(51) Int. Cl.: B67C 9/00, B65F 1/00, B67B 7/48

(54) **Vorrichtung und Verfahren zur restlosen Entleerung von Dosen und Flaschen**
Device and method for emptying tins and bottles without leaving a residue
Dispositif et procédé pour vider le contenu résiduel de bidons ou de bouteilles

(30) Priorität: 13.09.1988 DE 3831154
(43) Veröffentlichungstag der Anmeldung: 21.03.1990
(73) Patentinhaber: FIRMA ALFRED KUEHMICHEL, D-35799 Allendorf-Weilburg (DE)
(72) Erfinder: Kuehmichel, Manfred, D-6295 Allendorf-Weilburg (DE)
(74) Vertreter: Blumbach Weser Bergen Kramer

(56) Entgegenhaltungen:
- CH-A- 287 172
- US-A- 2 199 970

## Beschreibung

Die Erfindung bezieht sich auf ein Verfahren zur weitestgehenden Entleerung von Flaschen oder Dosen, auf eine Vorrichtung zur Entleerung von Flaschen oder Dosen, auf eine Entgratungszange zum Präparieren des Auslaufrandes von Kunststoffflaschen und -dosen, auf eine Vorrichtung zum Präparieren des Auslaufrandes von Flaschen oder Dosen sowie auf eine Sammelvorrichtung bei der Durchführung des Verfahrens.

Öldosen werden üblicherweise mit einem Dorn geöffnet, der Durchstoßöffnungen mit nach innen reichenden Graten am Öldosenboden bildet. Bei einer bekannten Vorrichtung zur Nachentleerung von so geöffneten Dosen (US-A-2 199 970) ist ein Abtropfkasten mit oberseitiger Klappe vorgesehen, die Zugang zu einer schräg angeordneten Platte gewährt, die mit einer Vielzahl von Öffnungen versehen ist. Der jeweilige Öffnungsrand ist mit einem Kranz nach unten reichender Drähte versehen, die entlang eines konischen Mantels angeordnet sind. Geöffnete Öldosen mit einem Restinhalt können schräg nach unten in die Plattenöffnungen und die Drahtkränze gehängt werden, und abtropfendes Öl wird auf einem Boden aufgefangen und in einem Auffanggefäß gesammelt. Da die Durchstoßöffnungen im Öldosenboden praktisch niemals am Dosenmantel angeordnet sind, verbleibt in der Öldose ein toter Winkel, aus dem das Restöl bei schräger Stellung der Dose nicht auslaufen kann. Deshalb und wegen der nach innen gerichteten Grate an den Durchstoßöffnungen ist eine restlose Entleerung der Dosen nicht möglich.

Bei der Entsorgung von Abfallöldosen ist es lästig, daß in diesen Abfalldosen noch eine Restmenge an Frischöl haftet. Im Falle von Flaschen oder Dosen aus Kunststoff könnte das Wandmaterial wiederverwendet (recycled) werden, wenn die Beseitigung des Restöls gelänge.

Die Aufgabe, Dosen und Flaschen weitgehend zu entleeren, wird durch die kennzeichnenden Merkmale der Ansprüche 1 und 3 gelöst.

Der mit dem erfindungsgemäßen Verfahren gewonnene Restinhalt der Flaschen oder Dosen kann einer sinnvollen Verwendung zugeführt werden. Die Dosen oder Flaschen sind nach der erfindungsgemäßen Behandlung soweit vorgereinigt, daß das Material dieser Dosen oder Flaschen einer Wieder verwendung zugeführt werden kann.

Das Entleerungsverfahren kann insbesondere auf Motoröl angewendet werden, dessen Haftfähigkeit besonders groß ist, so daß sich in an sich entleerten Dosen oder Flaschen größere Restmengen an solchem Motoröl finden und die Ausbeute mit dem erfindungsgemäßen System lohnend wird. Das Material der entleerten Dosen oder Flaschen wird dem Recycling zugeführt.

Gerätemäßig weist das erfindungsgemäße System einen Abtropfkasten auf, der geneigte Abtropfböden oder -bleche aufweist. Zur Anpassung an unterschiedliche Größen der Dosen oder Flaschen können diese Abtropfböden oder -bleche umgehängt werden, weswegen Führungen an der Rückwand des Kastens vorgesehen sind, in welche diese Abtropfbleche eingehängt sind. Die Abtropfböden oder -bleche sind an ihrem vorderen Rand im Sinne einer Rinne ausgebildet. Auf diese Weise kann die gewonnene Flüssigkeit unmittelbar in Auffanggefäße geleitet werden. Es ist aber auch möglich, die wiedergewonnene Flüssigkeit im unteren Teil des Abtropfkastens zu sammeln und über eine Ablaßschraube oder dergleichen in ein Auffanggefäß abzulassen.

Zum gekippten Halten der Flaschen oder Dosen weisen die Abtropfböden Halter z. B. in Form von Stiften auf. Die Länge der Stifte oberhalb der Abtropfböden kann verändert werden, sei es, daß die Stifte gekürzt werden, sei es, daß diese weiter in die Ebene des Abtropfbodens hineingeschraubt werden. Die Halter können einen tannenbaumartigen Querschnitt aufweisen.

Zur weitgehend restlosen Entleerung von Dosen für Motoröl kann der Halsrand der Abfalldosen gratfrei abgeschnitten werden. Zu diesem Zweck ist eine spezielle Entgratungszange vorgesehen, welche den Öffnungsrand von Kunststoffdosen gratfrei zu machen ermöglicht. Es kann aber auch eine Vorrichtung zum Anbringen einer Auslauföffnung mit Auslaufrand an einer Flasche oder Dose vorgesehen sein, die ein hobelartiges oder Raubvogelschnabel-artiges Werkzeug aufweist, das die Auslauföffnung vom Inneren der Dose oder Flasche schneidet, so daß der Öffnungsrand mit nach außen gerichteten Graten versehen ist, welche den Auslauf auch von zäher Flüssigkeit begünstigen. Bei solchen präparierten Dosen wird eine restlose Entleerung erzielt, d. h. die Restmenge ist weniger als ein Tropfen Motoröl.

Das Gesamtsystem umfaßt auch ein Sammelgefäß für die zu entleerenden Flaschen oder Dosen mit Restinhalt. Zum Schutz gegen eindringendes Wasser, welches das wiederzugewinnende Motorfrischöl verderben könnte, ist ein gewölbter Deckel mit Einwurfkanal für das Sammelgefäß vorgesehen. Der Einwurfkanal ist als Schutz gegen eindringendes Regenwasser ausgebildet, und eine Klappe durch die Durchbruchsöffnung durch den Deckel sorgt dafür, daß auch der Vorraum zum Sammelgefäß windgeschützt ist.

Die Erfindung wird anhand der Zeichnung besprochen. Dabei zeigt:
- Fig. 1: das Gesamtsystem in schematischer Darstellung,
- Fig. 2: einen Ölabtropfkasten, teilweise aufgeschnitten,
- Fig. 3: den Ölabtropfkasten, von der Seite gesehen, im Schnitt,
- Fig. 4: eine vergrößerte Einzelheit aus Fig. 3,
- Fig. 5: eine Entgratzange, von der Seite gesehen,
- Fig. 6: die Entgratzange im Draufblick,
- Fig. 7: einen Faßdeckel mit Einwurfkanal und
- Fig. 8: den Einwurfkanal in perspektivischer Darstellung,
- Fig. 9: eine zweite Ausführungsform des Ölabtropfkastens,
- Fig. 10: eine Einzelheit V in vergrößerter Darstellung aus Fig. 9,
- Fig. 11: eine Einzelheit W in vergrößerter Darstellung aus Fig. 9,
- Fig. 12: eine Einzelheit X in vergrößerter Darstellung aus Fig. 9,
- Fig. 13: eine Einzelheit Y in vergrößerter Darstellung aus Fig. 9 und
- Fig. 14: eine Einzelheit Z in vergrößerter Darstellung aus Fig. 9.

Wenn Autofahrer Motoröl nachfüllen, fällt eine Abfallöldose an, in der gewöhnlich noch eine Menge Frischöl haftet, welches bisher verloren geht. Öldosen sind gewöhnlich aus Kunststoff und haben eine angenäherte Flaschenform, wobei die Halsöffnung mit einer Membran verschlossen ist, die zur Entnahme des Frischöls durchstoßen werden muß. Wegen dieser Membran, die einen Grat bildet, kann sich die Öldose nicht völlig entleeren, auch wenn der Autofahrer die Öldose sehr lange an den Öleinfüllstutzen seines Motors hält. Die mangelnde Entleerung der Motoröldose ist nicht nur wegen des Verlustes an Frischöl bedauernswert, sondern auch im Hinblick auf Recycling des Kunststoffmaterials der Öldose schädlich.

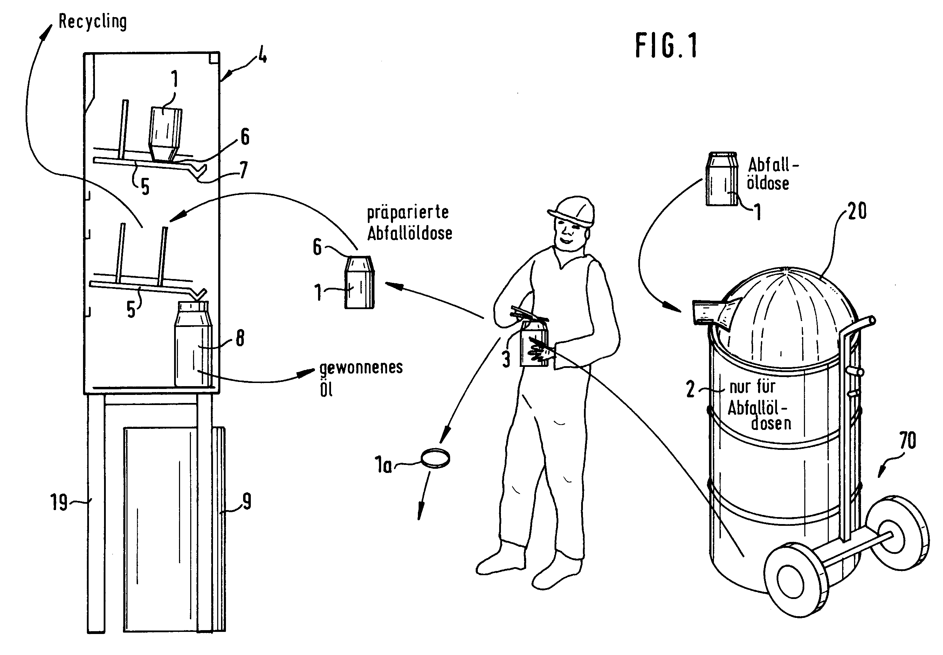

Mit dem erfindungsgemäßen System soll das restliche Frischöl in der Abfallöldose wiedergewonnen werden, und es soll diese Abfallöldose für das Recycling des Kunststoffmaterials vorbereitet werden. Wie aus Fig. 1 ersichtlich, werden Abfallöldosen 1 in einem Faß 2 gesammelt, was z. B. die Kunden an Tankstellen besorgen, und solche gesammelten Abfallöldosen werden mittels einer Entgratungszange 3 entgratet, wonach die Abfallöldose einen glatten Öffnungsrand 6 aufweist und als präpariert gilt. Die präparierten Abfallöldosen 1 werden in einen Ölabtropfkasten 4 gesteckt, welcher schräg angeordnete Abtropfböden 5 aufweist, mit denen der Öffnungsrand 6 der präparierten Abfalldose in Berührung gebracht wird. Die Dosen 1 stehen ein wenig schräg auf den Abtropfböden 5. Durch diese Kantenberührung kommt eine durchgehende Oberfläche zwischen Abtropffläche 5 und dem Inneren der präparierten Abfalldose zustande, so daß die Oberflächenspannung des restlichen Frischöls in der Dose das Frischöl nicht daran hindert, restlos aus der Dose abzufließen. Dieses restliche Frischöl fließt entlang dem Abtropfboden 5 in eine Rinne 7 und kann in einem Gefäß 8 aufgefangen werden. Alternativ kann ein Faß 9 unterhalb einer Ölablaßschraube am Ölabtropfkasten 4 aufgestellt werden, um das Öl aufzufangen.

Da die Abtropfzeit der präparierten Abfallöldosen 1 in dem Abtropfkasten 4 sehr lang, beispielsweise über einen Tag, gewählt werden kann, wird praktisch kein Restöl in den Abfallöldosen angetroffen, und aus den Abfallöldosen kann erneut Kunststoffmaterial gewonnen werden (Recycling).

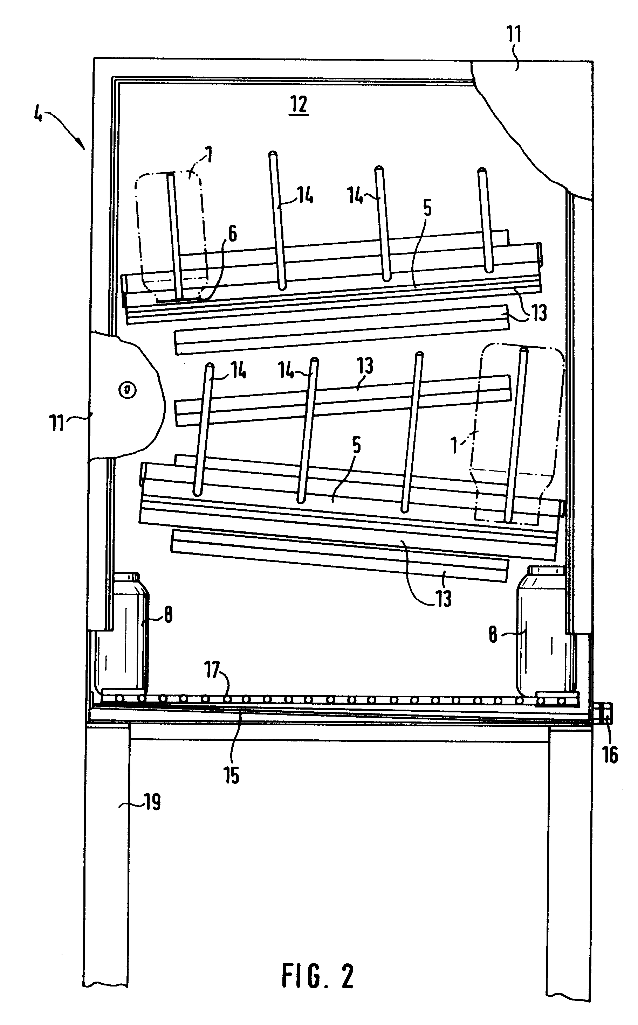

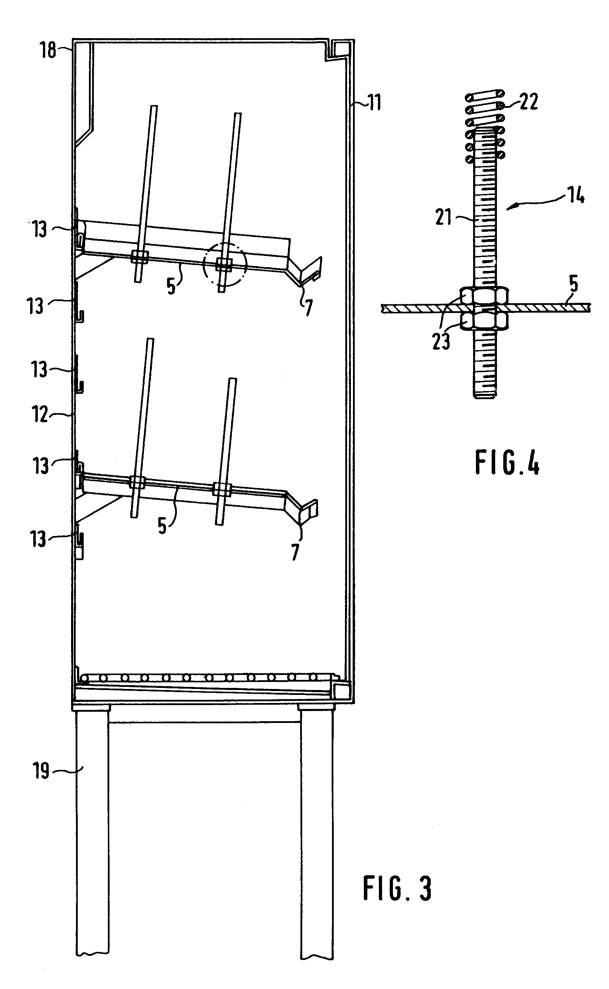

Fig. 2 und 3 zeigen den Ölabtropfkasten 4 von vorne bzw. der Seite, wobei in Fig. 2 die Tür 11 größtenteils weggebrochen ist, um den Blick ins Innere des Kastens freizugeben. An der Rückwand 12 sind Schienen 13 angebracht, und zwar mit einem gewissen Gefälle, wie ersichtlich. In diese Schienen sind die aus Blech gefertigten Abtropfböden 5 eingehängt, welche außerdem ein gewisses Gefälle nach vorne aufweisen, wie in den Fig. 1 und 3 dargestellt. Auf den Abtropfböden 5 ist eine Reihe von Stiften 14 angebracht, deren Länge passend zur Größe der restlos zu entleerenden Abfallöldosen gewählt ist. Wie bereits erwähnt, müssen die Abfallöldosen 1 mit ihrem Rand 6 auf der Oberfläche des Abtropfbodens 5 einseitig aufliegen, weswegen die Stifte 14 nicht allzu lang sein dürfen, während andererseits ein Herumfallen der Abfallöldosen 1 verhindert werden soll.

Der Wandboden 15 des Ölabtropfkastens 4 ist geneigt und führt zu einer Ölablaßschraube 16, die im übrigen auch abweichend von Fig. 2 unterhalb des Ölkastens 4 angeordnet sein kann. Oberhalb des geneigten Wandbodens 15 kann ein Rost 17 angeordnet sein, auf den die Ölauffanggefäße 8 gestellt werden können, wie dargestellt. Das obere Abtropfblech 5 ist in der Zeichnung nach links geneigt, so daß sich das wiedergewonnene Öl im linken Gefäß 8 sammelt, während das untere Abtropfblech 5 nach rechts geneigt ist mit der Folge, daß sich im rechten Gefäß 8 das wiedergewonnene Frischöl wiederfindet.

Wie aus Fig. 3 hervorgeht, ist die Rückwand 12 an ihrem oberen Ende eingezogen und bildet eine Hintergreifleiste 18, so daß der Ölabtropfkasten an einer Wand aufgehängt werden kann. Es ist aber auch möglich, ein Fußgestell 19 vorzusehen, um den Ölabtropfkasten 4 freistehend zu montieren.

Fig. 4 zeigt eine vergrößerte Einzelheit Z aus Fig. 3. Wie ersichtlich, kann der Stift 14 aus einem Schraubbolzen 21 und einer eng gewickelten Schraubenfeder 22 bestehen, die auf das obere Ende des Schraubbolzens 21 aufgesteckt und gegebenenfalls auch angelötet ist. Die Befestigung in einer Bohrung im Blech 5 erfolgt über zwei Muttern 23, die den Bohrungsrand einklemmen. Die Schraubfeder 22 kann bei Bedarf leicht gekürzt werden, so daß die passende Länge des Stiftes 14 den Erfordernissen angepaßt werden kann.

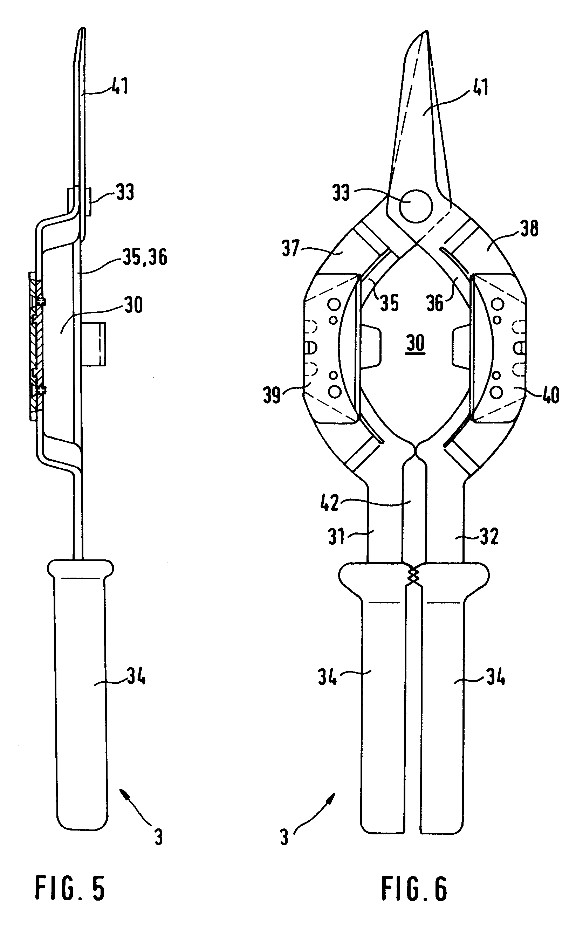

In den Fig. 5 und 6 ist die Entgratungszange 3 gezeigt, mit der die Abfallöldose so präpariert werden kann, daß der Öffnungsrand gratlos wird, um die restlose Entleerung des Frischöls zu ermöglichen. Die Entgratungszange besitzt zwei Schenkel 31, 32, die über einen Achsniet 33 miteinander verbunden sind und gegeneinander geschwenkt werden können, um das Zangenmaul 30 zu erweitern und zu schließen. Zur bequemeren Handhabung besitzt die Zange Griffe 34. Die Schenkel 31, 32 machen jeweils einen Bogen um das Zangenmaul 30 herum, in welchem der Hals der Abfallöldose zu erfassen ist. Zu diesem Zweck weisen die Schenkel 31 und 32 jeweilige Führungsränder 35 und 36 auf, die von oben her auf den Öffnungsrand der Abfallöldose zu legen sind. Parallel zu den Führungsrändern 35, 36 erstrecken sich bogenförmige Haltelappen 37, 38, an denen Schneidklingen 39, 40 befestigt sind, wobei sich die Schneiden gegenüberstehen und in das Zangenmaul 30 hineinragen. Das vordere Ende der Entgratungszange kann noch als Schere 41 ausgebildet sein.

Wenn die Entgratungszange 3 geöffnet wird, nimmt das Zangenmaul 30 eine Form passend zum Hals der Öldose an, und die Auflageränder 35, 36 bilden eine Führung für den oberen Rand der Öldose, so daß diese gedreht werden kann. Durch entsprechendes Schließen der Zange kommen die Schneiden der Klingen 39, 40 mit dem Hals der Öldose in Eingriff, und durch Drehen der Zange relativ zur Öldose kann ein Halsring 1a abgetrennt werden, so daß die präparierte Abfallöldose erhalten wird, welche einen gratfreien Rand 6 besitzt.

Die Klingen 39, 40 sind austauschbar befestigt, beispielsweise angeschraubt, und können gegen neue Klingen ausgetauscht werden, falls benötigt. Der Bereich 42 zwischen den Schenkeln 31, 32 kann im übrigen auch mit gekerbten, gebogenen Rändern gestaltet sein, um Schraubverschlüsse besser greifen zu können.

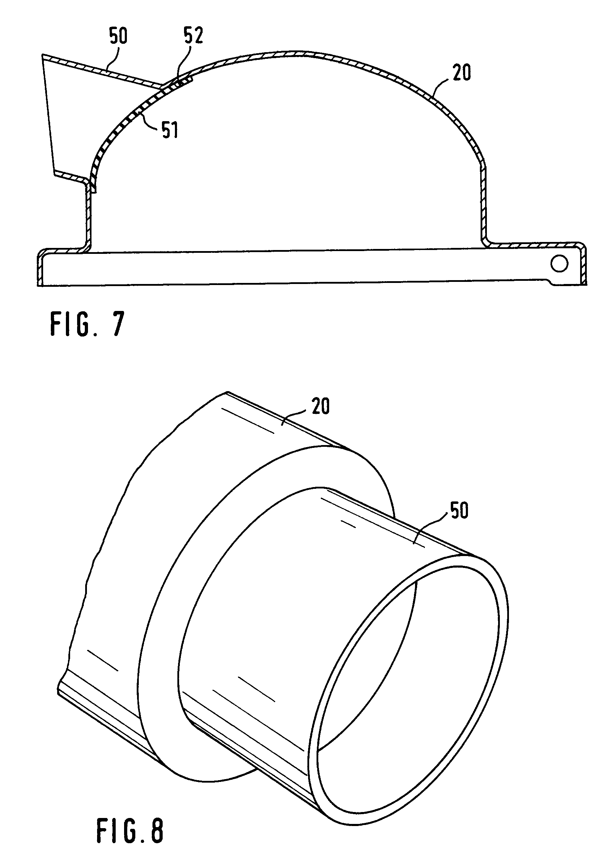

Fig. 7 und 8 zeigen einen gewölbten Faßdeckel 20, der mit einem rohrförmigen Einwurfkanal 50 für Abfallöldosen versehen ist. Der Einwurfkanal 50 ist genügend lang und etwa horizontal angeordnet, um Regen von seinem Inneren abzuschirmen. Deswegen ist der vordere Rand des Einwurfkanals 50 leicht überhängend-schräg gestaltet. Der gewölbte Faßdeckel 20 weist einen kreisförmigen Ausschnitt im Bereich des Einwurfkanals 50 auf, und dieser kreisförmige Ausschnitt wird von einer Gummiklappe 51 abgedeckt, die im Inneren des Faßdeckels 20 bei 52 befestigt ist. Das Gummimaterial der Klappe 51 ist genügend nachgiebig, so daß Abfallöldosen in das Rauminnere des Faßdeckels 20 geschoben werden können, und genügend elastisch rückfedernd, um die ausgeschnittene Öffnung abzudecken und zu verschließen.

Der Faßdeckel 20 ist mit einem nicht dargestellten Spannring auf dem Faß 2 befestigt, welches im übrigen mit einer Transportkarre 70 verfahren werden kann. (Nähere Einzelheiten sind in EP 88 106 176.6 des Anmelders offenbart.)

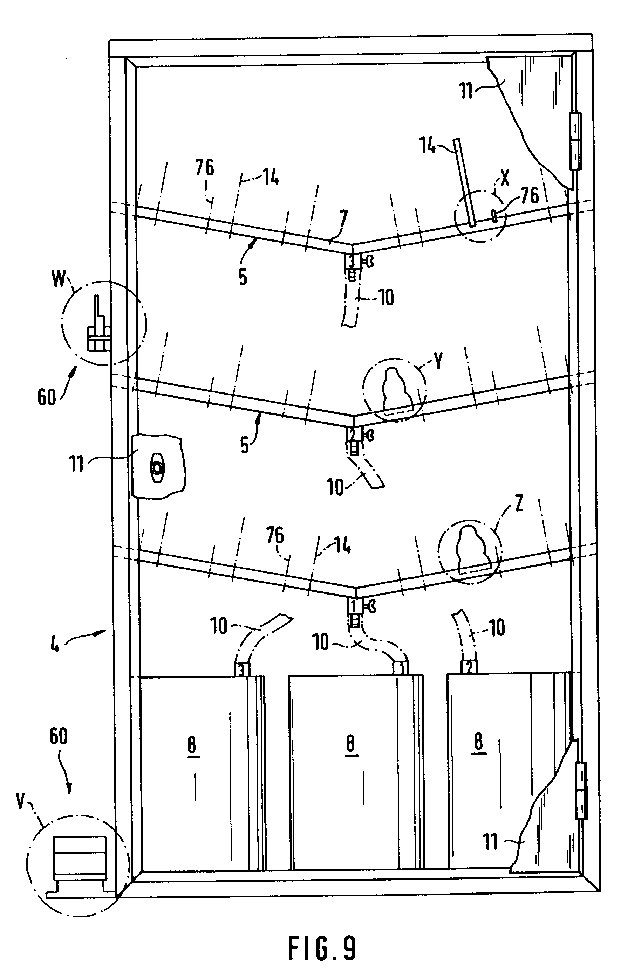

Fig. 9 zeigt eine zweite Ausführungsform des Ölabtropfkastens 4 bei größtenteils weggebrochener Tür 11, wobei die gleichen Bezugszeichen wie bei der ersten Ausführungsform nach Fig. 2 und 3 benutzt werden. Der Ölabtropfkasten ist zum Aufstellen auf dem Boden gedacht, und es sind drei Abtropfböden 5 sowie Raum für drei Gefäße 8 vorgesehen, die über jeweilige Schlauchleitungen 10 mit den tiefsten Stellen der Böden 5 verbunden sind. Die Böden 5 sind nach der Mitte zu und nach vorne hin leicht geneigt, um in eine Rinne 7 einzumünden, wie diese ähnlich in Fig. 3 dargestellt ist.

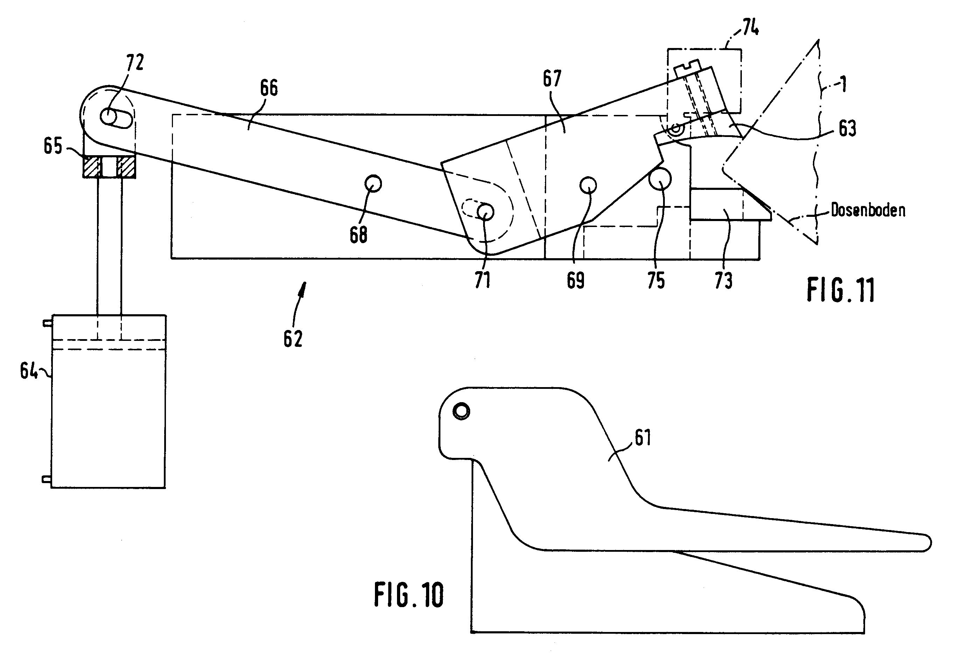

An dem Abtropfkasten nach Fig. 9 ist eine Vorrichtung 60 zum Anbringen einer Öffnung mit Auslaufrand 6 an einer Flasche oder Dose 1 vorgesehen. Die Vorrichtung 60 umfaßt einen Fußhebel 61, wie er in Fig. 10 näher dargestellt ist, und eine Betätigungseinrichtung 62 für ein schnabelartiges Werkzeug 63 (Fig. 11). Die Betätigungseinrichtung 62 weist einen Arbeitszylinder 64 mit Kolbenstange 65 und zwei miteinander verbundene doppelarmige Hebel 66 und 67 auf, die bei 68 und 69 jeweils schwenkbar gelagert und bei 71 miteinander gekoppelt sind. Die Kolbenstange 65 ist mit dem Hebel 66 bei 72 gekoppelt. Wenn demnach der Arbeitszylinder 64 einen Arbeitshub macht, wird der Hebel 66 in Fig. 2 entgegen dem Uhrzeigersinn und der Hebel 67 im Uhrzeigersinn geschwenkt, wobei sich das Werkzeug 63 in einen Raum zwischen zwei Anlagebacken 73 bewegt. Die Anlagebacken 73 dienen zur Aufstützung einer Flasche oder Dose 1, in die eine Öffnung mit Auslaufrand 6 gerissen werden soll. Das Werkzeug 63 hat eine gewisse Ähnlichkeit mit dem Schnabel eines Greifvogels, d. h. die schneidenden Ränder sind bogenförmig und treffen sich im spitzen Winkel in einer Spitze, die als erstes in die Wandung der Flasche oder Dose 1 eindringt. Im dargestellten Ausführungsbeispiel ist dies ein Dosenmantel, aus dem ein dreieckförmiges Stück geschnitten wird. Wichtig ist jedoch, daß der Boden der Dose 1 durch das Werkzeug 63 von oben her durchtrennt wird, so daß der Rand der gebildeten Auslaßöffnung mit einem Grat nach unten versehen wird, der eine gute Abtropfkante bildet. Ein so ausgebildeter Rand wird als Auslaufrand bezeichnet. Wenn demgegenüber die Öffnung so gebildet wird, daß der Grat ins Doseninnere weist, wird ein solcher Öffnungsrand als Sperrand bezeichnet. Bei der bisher üblichen Art der Öffnung von Dosen ist immer ein Sperrand erzeugt worden, weswegen sich eben die Dosen nicht vollständig leeren lassen. Durch die neue Art der Erzeugung der Öffnung mit nach außen gerichteten Graten ist dagegen eine vollständige Entleerung von Dosen möglich.

Die Vorrichtung 60 zum Anbringen einer Auslauföffnung kann pneumatisch, hydraulisch oder elektrisch, aber auch mit Fußkraft betrieben werden. In der Ruhestellung des Geräts wird eine Kappe 74 über das Werkzeug 63 geschwenkt, und der Hebel 67 wird mittels eines Riegels 75 gesichert.

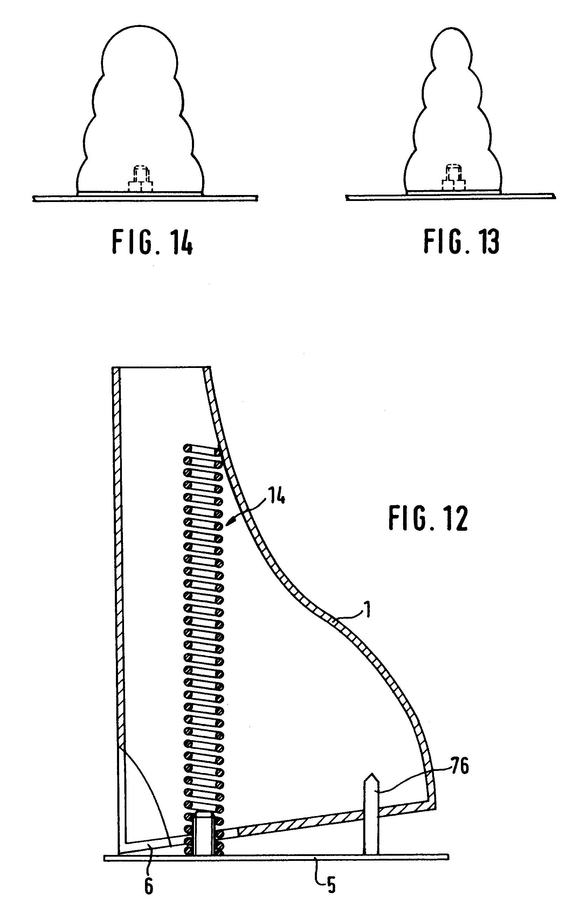

Fig. 12 zeigt, daß neben dem Stift 14 noch ein weiterer Stift 76 vorgesehen sein kann, der mit einer Spitze versehen ist. Um Flaschen oder Dosen 1 restlos zu entleeren, sollte nämlich der Auslaufrand 6 den jeweiligen geneigten Boden 5 berühren. Damit dies beibehalten bleibt, ist eine gewisse Fixierung der Dose oder Flasche 1 wünschenswert, was mit Hilfe des Stiftes 76 geschieht.

Wie die Fig. 13 und 14 zeigen, kann der Stift 14 auch tannenbaumartig gestaltet sein, und zwar schlanker (Fig. 13) oder breiter (Fig. 14), um unterschiedliche Arten von Flaschen und Dosen in geeigneter Weise zu stützen.

## Patentansprüche

1. Verfahren zur weitestgehenden Entleerung von Dosen oder Flaschen mit folgenden Merkmalen:
Flaschen oder Dosen (1) mit einem Restinhalt von Flüssigkeit werden gesammelt;
die gesammelten Flaschen oder Dosen (1) werden im Hinblick auf einen Auslaufrand (6) präpariert, der entweder gratfrei ist oder einen Grat in Auslaufrichtung aufweist;
die präparierten Flaschen oder Dosen (1) werden mit ihrem Auslaufrand (6) auf einen jeweiligen Boden (5) eines Abtropfkastens (4) leicht gekippt aufgestellt, so daß sich ein durchgehender Flüssigkeitsfilm zwischen dem Inneren der Flasche oder Dose (1) und der Oberfläche des Bodens (5) ergibt;
die Restflüssigkeit wird während einer genügend langen Zeitdauer über den Auslaufrand (6) ausfließen lassen und in ein Auffanggefäß (8, 9) geleitet;
die Flaschen oder Dosen (1) werden aus dem Abtropfkasten (4) entnommen und können der Weiterverwendung zugeführt werden;
die Restflüssigkeit, welche sich in dem Auffanggefäß (8, 9) angesammelt hat, wird der bestimmungsgemäßen Verwendung zugeführt.

2. Verfahren nach Anspruch 1,
dadurch gekennzeichnet, daß es sich bei der Flüssigkeit um Motoröl handelt.

3. Vorrichtung zur Entleerung von Flaschen oder Dosen
mit einem Abtropfkasten (4),
mit einem Boden (5) zum Auffangen von Restflüssigkeit und
mit einem Auffanggefäß (2, 9),
gekennzeichnet durch folgende Merkmale:
der Boden (5) der Vorrichtung weist eine so ausgebildete Stützeinrichtung (14) auf, daß Flaschen oder Dosen (1) mit einem präparierten Auslaufrand (6), mittels einer Entgratungszange, geneigt auf dem Boden stehen, wobei eine durchgehende Oberfläche zwischen dem Inneren der Flasche oder Dose (1) und dem Boden (5) zustande kommt und die Flüssigkeit weitgehend restlos abfließen kann.

4. Vorrichtung nach Anspruch 3,
dadurch gekennzeichnet,
daß der Stützeinrichtung (14) eine Halteeinrichtung (76) zugeordnet ist, welche die Flaschen oder Dosen (1) im gekippten Zustand auf den Böden (5) hält.

5. Vorrichtung nach Anspruch 3,
dadurch gekennzeichnet,
daß die Stützeinrichtung (14) tannenbaumartig gestaltet ist.

6. Vorrichtung nach einem der Ansprüche 3 bis 5,
dadurch gekennzeichnet,
daß der Abtropfkasten (4) eine vorderseitige Tür (11) aufweist, die Zugang zu wenigstens zwei übereinander angeordneten Böden (5) schafft. und
daß die Rückwand (12) übereinander angeordnete Befestigungsmittel (13) für die Böden (5) umfaßt.

7. Vorrichtung nach einem der Ansprüche 3 bis 6,
dadurch gekennzeichnet,
daß die Böden (5) an ihrem vorderen Rand im Sinne einer Rinne (7) ausgebildet sind.

8. Entgratungszange zum Präparieren des Auslaufrandes von Kunststoffflaschen oder -dosen, gemäß den Ansprüchen 1 oder 3 dadurch gekennzeichnet,
daß die Entgratungszange (3) Führungsränder (35, 36) zum Auflegen auf den Öffnungsrand der Flasche oder Dose (1) aufweist und daß in parallelem Abstand zu den Auflagerändern (35; 36) Schneidklingen (39, 40) angeordnet sind, die in ein bei geöffneter Zange zylinderförmiges Zangenmaul (30) hineinreichen und einen ringförmigen Rand (1a) von der Flasche oder Dose (1) abzutrennen ermöglicht.

9. Schneidevorrichtung zum Präparieren des Auslaufrandes von Flaschen oder Dosen, gemäß den Ansprüchen 1 oder 3.
dadurch gekennzeichnet,
daß eine Antriebsvorrichtung (62) und ein angetriebenes hobelartiges oder Raubvogelschnabel-artiges Werkzeug (63) vorgesehen sind, welches den Boden der Flasche oder Dose (1) von oben und mit einem Grat nach unten zu durchtrennen ermöglicht.

10. Schneidevorrichtung nach Anspruch 9,
dadurch gekennzeichnet,
daß zwei Auflageflächen (73) für den Boden der Flasche oder Dose (1) vorgesehen sind, zwischen denen ein freier Raum zum Aufnehmen des Werkzeugs (63) gelassen ist, in dem das Werkzeug (63) nach Durchtrennen von innen des Bodens der Flasche oder Dose (1) eintreten kann.

11. Sammelvorrichtung bei der Durchführung des Verfahrens nach einem der Ansprüche 1 oder 2,
dadurch gekennzeichnet,
daß ein Sammelgefäß (2) für Flaschen oder Dosen mit Restinhalt vorgesehen ist, welches einen gewölbten Deckel (20) und einen Einwurfkanal (50) aufweist.

12. Sammelvorrichtung nach Anspruch 11,
dadurch gekennzeichnet, daß der Einwurfkanal (50) als Schutz gegen eindringendes Regenwasser ausgebildet ist und daß eine Klappe (51) die Durchbruchsöffnung durch den Deckel (20) verschließt.

## Claims

1. A method for extensively clearing of tins or bottles comprising the following steps:
collecting bottles or tins (1) having remnants of liquid;
preparing the collected bottles or tins (1) in respect to a draining rim (6) which is either free of burrs or has a burr in draining direction;
positioning the draining rim (6) of the prepared bottles or tins (1) onto a respective base (5) of a drip box (4) in a slightly tilted manner so as to create a liquid film which is uninterrupted between the interior of the bottle or tin (1) and the surface of the base (5);
causing the remnant liquid to flow out over the draining rim (6) during a sufficient duration of time and passing same into a collecting vessel (8, 9);
drawing the bottles or tins (1) from the drip box (4) for being devoted to further use; and
devoting the remnant liquid collected in the collection vessel (8, 9) to the provided use.

2. The method of claim 1
wherein the liquid is motor oil.

3. A device for depleting bottles or tins, comprising
a drip box (4),
a base (5) for collecting remnant liquid and
a collecting vessel (8, 9),
characterized in that
the base (5) of the device comprises a supporting means (14) adapted to hold the bottles or tins (1) having a draining rim (6) prepared by deflashing nippers so that these bottles or tins stand tilted on the base, providing an uninterrupted surface between the interior of the bottle or tin (1) and the base (5) so that the liquid can flow out essentially completely.

4. The device according to claim 3,
wherein a holding means (76) is assigned to the supporting means (14), the holding means holding the bottles or tins (1) in a tilted condition on the basis (5).

5. The device according to claim 3
wherein the supporting means (14) is configured firtree-like.

6. The device according to one of the claims 3 through 5, wherein the drip box (4) comprises a door (11) on the frontside providing access to at least two bottoms (5) arranged one above the other and wherein a rear wall (12) comprises fixing means (13) for the bottoms (5) being arranged one above the other.

7. A device according to one of the claims 3 through 6 wherein each bottom (5) has a forward rim which is configured as a channel (7).

8. Deflashing nippers for preparing the draining rim of bottles or tins made of plastics according to claims 1 or 3,
wherein the deflashing nippers (3) comprise leading rims (35, 36) for positioning the opening of the bottle or tin thereonto and
wherein cutting knives (39, 40) are arranged in a distance parallel to the leading rims (34, 36), the cutting knives extending into a cylindric mouth (30) of the nippers when the same is opened and being able to cut an annular rim (1a) from the bottle or tin.

9. Cutting device for preparing the draining rim of bottles or tins according to claims 1 or 3,
wherein a drive means (62) and a driven tool (63) which is plane-like or beak-like are provided to cut through the bottom of the bottle or tin (1) from above and with a flash directed downwardly.

10. Cutting device according to claim 9,
wherein a pair of engagement surfaces (73) are provided for the bottom wall of the bottle or tin (1), a clearance space being left therebetween to take up the tool (63) which may enter therein after having cut through the bottom wall of the bottle or tin (1) from the inside.

11. Collecting device useful for carrying out the method according to one of the claims 1 or 2,
wherein a collecting vessel (2) for bottles or tins with remnants is provided which comprises a concave lid (20) and an input channel (50).

12. Collecting device according to claim 11,
wherein the input passage (50) is configured as a protection against rainwater and
wherein a flapper (51) shuts the entering opening through the lid (20).

## Revendications

1. Procédé pour vider autant que possible le contenu résiduel de bouteilles ou de bidons avec les caractéristiques suivantes :
les bouteilles ou bidons (1) avec liquide résiduel sont collectés ;
les bouteilles ou bidons collectés (1) sont préparés en vue d'un bord de vidange (6) qui soit est sans bavure, soit présente des bavures dans la direction d'écoulement ;
les bouteilles ou bidons préparés (1) sont positionnés légèrement inclinés avec leur bord de vidange (6) sur le fond correspondant (5) d'une armoire d'égouttage (4) de sorte à créer un film continu de liquide entre l'intérieur de la bouteille ou du bidon (1) et la surface du fond (5) ;
le liquide résiduel s'écoule pendant un temps suffisant par le bord de vidange (6) et est conduit dans un collecteur (8, 9) ;
les bouteilles ou bidons (1) sont retirés de l'armoire d'égouttage (4) et peuvent être dirigées vers leur utilisation ultérieure ;
le liquide résiduel qui s'est accumulé dans le collecteur (8, 9) est dirigé vers son utilisation prévue.

2. Procédé selon la revendication 1,
caractérisé par ce que le liquide est de l'huile pour moteur.

3. Dispositif pour vider des bouteilles ou bidons
avec une armoire d'égouttage (4),
un fond (5) pour recueillir le liquide résiduel et
un collecteur (8, 9),
caractérisé de la manière suivante :
le fond (5) du dispositif présente des supports (14) réalisés de sorte que les bouteilles ou bidons (1) dotés d'un bord de vidange (6) préparé avec une pince à ébavurer, reposent inclinés sur le fond de manière qu'une surface continue se forme entre l'intérieur de la bouteille ou du bidon (1) et le fond (5) et que le liquide puisse s'écouler pratiquement sans résidu.

4. Dispositif selon la revendication 3,
caractérisé par ce que
une base (76) est associée au support (14) de sorte que cette base maintienne les bouteilles ou bidons (1) inclinés sur le fond (5).

5. Dispositif selon la revendication 3,
caractérisé par ce que
le support (14) est en forme d'arête de poisson.

6. Dispositif selon l'une des revendications 3 à 5,
caractérisé par ce que
l'armoire d'égouttage (4) possède une porte avant (11) qui ouvre l'accès à au moins deux fonds (5) superposés et que
la paroi arrière (12) comprend des moyens de fixation superposés (13) pour les fonds (5).

7. Dispositif selon l'une des revendications 3 à 6,
caractérisé par ce que
les fonds (5) possèdent une gouttière (7) en leur partie antérieure.

8. Pince à ébavurer pour la préparation du bord de vidange de bouteilles ou de bidons en plastique selon les revendications 1 ou 3,
caractérisée par ce que
la pince à ébavurer (3) présente des bords de guidage (35, 36) pour assurer l'appui sur le goulot de la bouteille ou du bidon (1) et que des lames de coupe (39, 40) sont placées parallèlement aux bords de guidage (35, 36) de sorte que, lorsque la pince est ouverte, ces lames pénètrent dans une gueule de pince cylindrique (30) et permettent de détacher un bord annulaire (1a) de la bouteille ou du bidon (1).

9. Dispositif de coupe pour la préparation du bord de vidange de bouteilles ou de bidons selon les revendications 1 ou 3,
caractérisé par ce que
sont prévus un dispositif d'entraînement (62) et un outil entraîné en forme de rabot ou de bec de rapace (63) qui permet de couper le fond de la bouteille ou du bidon (1) depuis le haut de sorte que les bavures soient dirigées vers le bas.

10. Dispositif de coupe selon la revendication 9,
caractérisé par ce que
sont prévues deux surfaces d'appui (73) pour le fond de la bouteille ou du bidon (1) entre lesquelles existe un espace libre destiné à accepter l'outil (63) après que celui-ci ait coupé depuis l'intérieur le fond de la bouteille ou du bidon (1).

11. Dispositif de collecte pour la réalisation du procédé selon l'une des revendications 1 ou 2,
caractérisé par ce que
un container de collecte (2) est prévu pour les bouteilles ou bidons avec contenu résiduel, ledit container (2) présente un couvercle bombé (20) et un conduit d'introduction (50).

12. Dispositif de collecte selon la revendication 11,
caractérisé par ce que
le conduit d'introduction (50) a d'une forme qui empêche l'entrée d'eau de pluie et qu'un clapet (51) referme l'ouverture pratiquée dans le couvercle (20).
